# EUROPÄISCHE PATENTSCHRIFT

(11) **EP 3 271 046 B1**
(45) Veröffentlichungstag und Bekanntmachung des Hinweises auf die Patenterteilung: **12.02.2020**
(21) Anmeldenummer: 16710937.0
(22) Anmeldetag: 07.03.2016
(51) Int. Cl.: B01D 53/14, B01D 53/52, C01B 17/05, C10L 3/10

(54) **VERFAHREN UND VORRICHTUNG ZUR ENTSCHWEFELUNG EINES GASSTROMS**
METHOD AND DEVICE FOR THE DESULPHURISATION OF A GAS FLOW
PROCÉDÉ ET DISPOSITIF DE DÉSULFURATION D'UN FLUX DE GAZ

(30) Priorität: 12.05.2015 DE 102015208791
(43) Veröffentlichungstag der Anmeldung: 24.01.2018
(73) Patentinhaber: Siemens Aktiengesellschaft, 80333 München (DE)
(72) Erfinder: JOH, Ralph, 63500 Seligenstadt (DE); SCHNEIDER, Rüdiger, 65817 Eppstein (DE); VORTMEYER, Nicolas, 91054 Erlangen (DE); ZIMMERMANN, Gerhard, 91315 Höchstadt / Aisch (DE)
(86) Internationale Anmeldenummer: PCT/EP2016/054723
(87) Internationale Veröffentlichungsnummer: WO 2016/180555

(56) Entgegenhaltungen:
- WO-A1-2014/170047
- US-A- 4 830 838

## Beschreibung

Die Erfindung betrifft ein Verfahren zur Entschwefelung eines Schwefelwasserstoff enthaltenden Gasstroms, insbesondere eines zur Verbrennung in einer Gasturbine nutzbaren Gasstroms. Weiter betrifft die Erfindung eine Vorrichtung zur Entschwefelung eines Gasstroms.

Erdgas ist ein fossiler Brennstoff mit einem vergleichsweise niedrigen Ausstoß von Kohlendioxid (CO₂) und vergleichsweise geringen Emissionen sonstiger Abfallprodukte bei der Verbrennung. Sein Beitrag als eine der wichtigsten Energieressourcen der Welt steigt weiter an. Vor dem Hintergrund der Rohstoffverknappung, des dauerhaft steigenden Energiebedarfs und aus Gründen des Umweltschutzes stellt die Aufbereitung und Nutzung von Erdgas somit eine vielversprechende Möglichkeit zur effizienten und emissionsarmen Erzeugung von Energie dar.

Entsprechend ist der Einsatz von Erdgas als Brenngas auch in Gasturbinen wünschenswert, um so einfach und kostengünstig elektrische und mechanische Energie erzeugen zu können. Allerdings ist die direkte Nutzung von Roh-Erdgas aufgrund enthaltener saurer Bestandteile, wie insbesondere Schwefelwasserstoff (H₂S), bisweilen nur bedingt möglich. Der störungsfreie und energieeffiziente Betrieb von Gasturbinen erfordert eine Begrenzung des Schwefelgehaltes im Brenngas, einerseits zur Vermeidung bzw. zumindest zur Verringerung von Hochtemperaturkorrosion, andererseits, um den weltweit verschärften Emissionsgrenzwerten im Hinblick auf Schwefeloxide (SOₓ) gerecht zu werden. Daher müssen schwefelwasserstoffhaltige Brenngase, und insbesondere saure Erdgase, entsprechend aufbereitet werden.

Zur der Abtrennung von Schwefelwasserstoff aus Gasen sind verschiedene Abscheidetechniken bekannt, bei welchen physikalische oder chemische Absorptionsmedien, auch Waschmedien genannt, eingesetzt werden, um die für eine weitere Verwendung des jeweiligen Gases geforderten Reinheiten zu gewährleisten. Neben den klassischen Absorptions-Desorptions-Verfahren mit anschließender H₂S-Konversion, beispielsweise mittels eines Claus-Prozesses, werden insbesondere für kleinere Kapazitäten sogenannte Liquid-Redox-Verfahren eingesetzt Diesen Liquid-Redox-Verfahren liegt das Konzept der Reaktiv-Absorption, also einer Kombination aus Absorption und Oxidation, zugrunde. Zur Abtrennung des Schwefelwasserstoffes aus den jeweiligen Gasen wird das Gas mit einem Waschmedium in Kontakt gebracht und der im Gas enthaltene Schwefelwasserstoff chemisch oder physikalisch an einer aktiven Substanz des Waschmittels gebunden. Das von Schwefelwasserstoff gereinigte Brenngas kann dann in einer Gasturbine verbrannt werden.

In der WO 2014/170047 A1 ist beispielsweise ein Konzept zur Entschwefelung eines Schwefelwasserstoff enthaltenden Brenngasstroms zur Verbrennung in einer Gasturbine offenbart, wobei in einem Absorber Schwefelwasserstoff aus dem Gasstrom unter Bildung von elementarem Schwefel mittels eines eine katalytische aktive Komponente enthaltenden Waschmediums absorbiert wird und die katalytisch aktive Komponente anschliessend in einer Regenerationsstufe reduziert wird. Die Aufbereitung des den Schwefelwasserstoff enthaltenden Waschmediums erfolgt anschließend durch ein Redoxmittel, welches im Waschmedium enthaltenen Schwefelwasserstoff in elementaren Schwefel umwandelt und den Schwefelwasserstoff so aus dem Waschmedium entfernt. Das Redoxmittel wird durch den Schwefelwasserstoff reduziert. Durch Kontaktieren mit einem sauerstoffhaltigen Gas wird das Redoxmittel wieder oxidiert und entsprechend regeneriert. Die Zufuhr des sauerstoffhaltigen Gases erfolgt hierbei beispielsweise über extra hierfür eingerichtete Gebläse oder durch die Begasung mit extern zugeführter, vorab komprimierter sauerstoffhaltiger Luft.

Der Erfindung liegt als eine erste Aufgabe zugrunde, ein Verfahren anzugeben, mittels welchem die Entschwefelung eines Brenngases gegenüber gängigen Verfahren effizienter und kostengünstiger durchgeführt werden kann.

Als eine zweite Aufgabe liegt der Erfindung zugrunde, eine Vorrichtung anzugeben, mittels welcher ein entsprechendes Verfahren wirtschaftlich durchführbar ist.

Die erste Aufgabe der Erfindung wird erfindungsgemäß gelöst durch ein Verfahren zur Entschwefelung eines Schwefelwasserstoff enthaltenden Gasstroms, insbesondere eines zur Verbrennung in einer Gasturbine nutzbaren Gasstroms, wobei der Gasstrom zur Absorption des Schwefelwasserstoffes und unter Bildung von elementarem Schwefel mit einem eine katalytisch aktive Komponente enthaltenden Waschmedium kontaktiert wird, wobei die katalytisch aktive Komponente bei der Bildung des elementaren Schwefels reduziert wird, wobei das die reduzierte katalytisch aktive Komponente enthaltende Waschmedium einer Regenerationsstufe zugeführt wird, in der die reduzierte katalytisch aktive Komponente durch Oxidation mit einem der Regenerationsstufe zugeführten sauerstoffhaltigen Gas zurückgebildet wird, und wobei das sauerstoffhaltige Gas der Regenerationsstufe von einem Verdichter einer Gasturbine zugeführt wird.

Die Erfindung geht von der Überlegung aus, dass eine möglichst hohe energetische und wirtschaftliche Effizienz eine Optimierung der Gesamtanlage bestehend aus einer Gasaufbereitung und einer entsprechend zur Verbrennung des aufbereiteten Gases eingesetzten Gasturbine bedingt. Dennoch stellen die Sauergasaufbereitung und der Gasturbinenbetrieb bisweilen zwei unabhängig voneinander ausgelegte Prozesse dar. So wird der Bedarf an Oxidationsluft für den Liquid-Redox-Prozess bislang aufwändig und kostenintensiv durch separate Gebläse, bzw. entsprechende Verdichter gedeckt.

Weiter berücksichtigt die Erfindung die Tatsache, dass im Rahmen der integrierten Vergasung in Gas- und Dampfturbinen (GUD)-Kraftwerken (IGCC-Integrated Gasification Combined Cycle) die Nutzung von Abluft des Verdichters einer Gasturbine möglich ist. Die dem Verdichter entnommene Luft wird hierbei einer weiteren Verwendung, wie beispielsweise einem Vergaser zugeführt und so zielgerichtet genutzt.

Diese Kenntnis überträgt die Erfindung nun auf den Prozess der Entschwefelung eines Gasstroms und erkennt, dass es ebenfalls möglich ist, die einem Gasturbinenprozess bzw. einem Verdichter einer Gasturbine entnehmbare Luft im Rahmen der Entschwefelung eines Gasstroms zu nutzen. Die durch den Verdichter bereitgestellte Luft enthält Sauerstoff, der zur Regeneration der im Rahmen der Gasaufbereitung bzw. des Liquid-RedOx-Prozesses der katalytisch aktiven Komponente nutzbar ist. Das sauerstoffhaltige Gas zur Regeneration der katalytisch aktiven Komponenten wird der Regenerationsstufe demnach von einem Verdichter einer Gasturbine zugeführt.

Das sauerstoffhaltige Gas wird dem Verdichter insbesondere auf einem Druckniveau entnommen, welches eine direkte Nutzung in der Regenerationsstufe ermöglicht. Eine Kompression oder eine Entspannung des sauerstoffhaltigen Gases vor dem Eintritt in die Regenerationsstufe ist somit nicht notwendig. Der Druck der Entnahmeluft wird hierbei durch das maschinentechnische Design des Verdichters und das optimierte Druckniveau der Regenerationsstufe bestimmt.

Mit anderen Worten handelt es sich um eine Kopplung bzw. eine Kombination des Entschwefelungsprozesses eines Gasstroms mit dem Gasturbinenprozess, durch welche der für die Regeneration der katalytisch aktiven Komponente geforderte Luftdurchsatz ohne einen zusätzlichen Energieeintrag in den Prozess erreicht wird. Diese Kombination wirkt sich insbesondere günstig auf die Energieeffizienz und damit auf die Wirtschaftlichkeit des Gesamtprozesses aus. Die Energieeffizienz des Regenerationsprozesses wird gegenüber gängigen Prozessen deutlich gesteigert, da Verdichter von Gasturbinen mit hoher energetischer Effizienz arbeiten. Weiter werden die Kosten gesenkt, da kein separater Luftverdichter für die Gasaufbereitung benötigt wird.

Insbesondere führt der erhöhte Sauerstoffpartialdruck des zugeführten sauerstoffhaltigen Gases zu einem verbesserten Stoffübergang und damit zu einer effizienteren Regeneration der katalytisch aktiven Komponente innerhalb der Regenerationsstufe, wodurch letztlich die zur Umwandlung von Schwefelwasserstoff notwendige Luftmenge verringert werden kann.

Zusätzlich ergeben sich mehr Freiheitsgrade für die Optimierung des Druckniveaus im Rahmen der Gasaufbereitung. Die Abtrennung des elementaren Schwefels aus dem Waschmedium erfolgt vorzugsweise auf nach vorher erfolgter Entgasung in einem entsprechend hierfür ausgebildeten Druckbehälter bzw. Flash-Behälter. So kann bei dem zur Schwefelabtrennung abgezogenen Strom bzw. der entsprechenden Suspension eine unerwünschte Entstehung von Schäumen verhindert werden.

Als Regenerationsstufe wird beispielsweise eine Blasensäule eingesetzt, die die zur Reaktion der katalytisch aktiven Komponente mit Sauerstoff nötige Stoffaustauschfläche bietet. Das Waschmedium wird der Regenerationsstufe zweckmäßigerweise an deren Kopf zugeführt. Die Zufuhr erfolgt vorzugsweise ausgehend von einem Absorber, in welchem der abzutrennende Schwefelwasserstoff in dem Waschmedium absorbiert wurde.

Zusätzlich zu der katalytisch aktiven Komponente ist im aus dem Absorber austretenden Waschmedium der gebildete elementare Schwefel enthalten. Dieser wird vorzugsweise vor dem Eintritt des Waschmediums in die Regenerationsstufe aus diesem abgetrennt. Die Abtrennung erfolgt in einer vorteilhaften Ausgestaltung in einem dem Absorber nachgeschalteten Druckbehälter. Ausgehend von diesem Druckbehälter wird das Waschmedium mit der reduzierten katalytische aktiven Komponenten, also dem verbrauchten Katalysator, dann der Regenerationsstufe zugeführt.

Das Waschmedium wird hierbei entweder aufgrund des im Absorber vorherrschenden Drucks oder mithilfe einer Pumpe zum Kopf der Regenerationsstufe geleitet. Das Waschmedium strömt dann, vom Kopf ausgehend, durch die Regenerationsstufe nach unten, also in Richtung des Bodens der Regenerationsstufe. Als Waschmedium wird bevorzugt ein Waschmedium mit einem Aminosäuresalz als waschaktive Substanz eingesetzt.

Das sauerstoffhaltige Gas wird der Regenerationsstufe zweckmäßigerweise an deren Boden zugeführt, und durchströmt die Regenerationsstufe somit in einer der Strömungsrichtung des Waschmediums entgegengesetzten Strömungsrichtung.

Die Reaktion des im Waschmedium enthaltenen Schwefelwasserstoffes zu elementarem Schwefel verläuft über die Bildung von Sulfiden innerhalb des Absorbers unter Einsatz der katalytisch aktiven Komponente. Hierbei werden innerhalb des Absorbers durch Kontakt des Schwefelwasserstoffes mit dem Waschmedium Sulfide gebildet, die dann unter Reduktion der im Waschmedium enthaltenen der katalytisch aktiven Komponente zu elementarem Schwefel reagieren.

Hierbei besteht grundsätzlich die Möglichkeit, dass die katalytisch aktive Komponente nicht nur in dem Waschmedium enthalten ist und gemeinsam mit diesem zirkuliert, sondern dass die katalytisch aktive Komponente zusätzlich hierzu auch innerhalb der Regenerationsstufe enthalten ist. Denkbar sind beispielsweise Feststoffpartikel in der Regenerationsstufe.

Vorzugsweise wird als katalytisch aktive Komponente ein Metallsalz eingesetzt. Prinzipiell eignen sich hierbei solche Metallsalze, deren Metallionen in mehreren Oxidationsstufen vorliegen können. Vorzugsweise werden die Salze der Metalle Eisen, Mangan oder Kupfer eingesetzt. Diese Metallsalze sind kostengünstig zu erwerben und weisen die gewünschten katalytischen Eigenschaften auf.

Zur Verbesserung der Löslichkeit des oder der jeweiligen Metallsalze ist es von Vorteil, wenn ein Waschmedium eingesetzt wird, dem ein Komplexbildner zugesetzt ist. Der Komplexbildner verhindert das Ausfällen der Metallionen als Metallsulfide (MeS). Prinzipiell eignen sich alle Komplexbildner, die in der Lage sind, die Metallionen in Lösung zu halten. Vorzugsweise werden EDTA (Ethylendiamintetraacetat), HEDTA (Hydroxyethyl-Ethylendiamintetraacetat), DTPA (Diethylentriaminpentaacetat) und/oder NTA (Nitriltriacetat) eingesetzt.

Grundsätzlich erfolgt die Oxidation des Schwefelwasserstoffes zu elementarem Schwefel unter Reduktion des Metallions. Beispielsweise bildet sich in einem Waschmedium, das als katalytische aktive Komponente komplexere Eisen(III)-Ionen enthält, durch Reaktion der in Lösung befindlichen Fe(III)-Ionen mit dem Schwefelwasserstoff (H₂S) elementarer Schwefel (S) und Fe(II)-Ionen. Die Fe(III)-Ionen werden somit durch die Reaktion mit Schwefelwasserstoff reduziert, wobei der Schwefelwasserstoff zu Schwefel oxidiert wird.

Der Schwefel fällt als Feststoff aus und die Fe(II)-Ionen bleiben in Lösung. Um die Fe(II)-Ionen in der Lösung zu halten und die Bildung von Eisensulfid (FeS) zu verhindern, ist dem Waschmedium wie vorbeschrieben ein Komplexbildner zugesetzt, so dass die Fe(II)-Ionen maskiert in Form von Chelatkomplexen im Waschmedium vorliegen.

Die Rückbildung der katalytisch aktiven Komponente erfolgt durch Oxidation mit aus dem Verdichter der Gasturbine entnommenem, in die Regenerationsstufe einströmendem sauerstoffhaltigen Gas. Bei Kontakt des Waschmediums mit dem sauerstoffhaltigen Gas tritt der im Gas enthaltene Sauerstoff von der Gasphase in die Flüssigphase, also in das Waschmedium, über. In der Flüssigphase erfolgt die Oxidation des zuvor bei der Schwefelbildung reduzierten Metall-Ions - wie vorbeschrieben beispielsweise Fe(II)-Ionen zu Fe(III)-Ionen - so dass diese erneut zur Abtrennung von Schwefelwasserstoff als elementarer Schwefel durch Oxidation zur Verfügung stehen.

Um eine möglichst vollständige Regeneration der katalytisch aktiven Komponente zu gewährleisten, wird der Regenerationsstufe vorzugsweise Sauerstoff im Überschuss - bezogen auf die zu oxidierende Menge der katalytisch aktiven Komponente - zudosiert. Vorzugsweise wird die Menge des der Regenerationsstufe zugeführten sauerstoffhaltigen Gases derart dosiert, dass das Verhältnis der zugeführten Menge an Sauerstoff zur Menge der katalytisch aktiven Komponente > 1 ist. In Bezug auf die dosierte Menge an Sauerstoff handelt es sich somit um eine überstöchiometrische Reaktion, bei der ein Überschuss an Sauerstoff vorhanden ist.

In einer weiter vorteilhaften Ausgestaltung der Erfindung wird das sauerstoffhaltige Gas vor dem Eintritt in die Regenerationsstufe gekühlt. Die bei der Kühlung des sauerstoffhaltigen Gases freiwerdende Wärme wird bevorzugt weiter genutzt. Besonders bevorzugt wird die bei der Kühlung des sauerstoffhaltigen Gases freiwerdende Wärme einer Aufbereitungsvorrichtung zur Aufbereitung des eingesetzten Waschmediums zugeführt. Alternativ oder zusätzlich sieht die Erfindung vor, die freiwerdende Wärme in einen Entschwefelungsprozess einzuspeisen.

In einer besonders vorteilhaften Ausgestaltung wird bei der Regeneration der katalytisch aktiven Komponente entstehende Abluft in den Verdichter der Gasturbine zurückgeführt. Bei der Abluft handelt es sich um den an bei der Oxidation der katalytische aktiven Komponente umgesetzten Sauerstoff abgereicherten Abluftstrom, der noch geringe Anteile an mitgerissenem Waschmedium, sowie weitere Entgasungsprodukte enthalten kann.

Durchläuft die Abluft der Regenerationsstufe den Verbrennungsprozess der Gasturbine, so werden unerwünschte Emissionen verringert. Der Abluftstrom wird der Regenerationsstufe vorzugsweise an deren Kopf entnommen. Hierbei ist eine Kühlung des Abluftstroms optional durch einen Wärmetauscher umsetzbar. In einer alternativen Ausgestaltung wird der Abluftstrom abgeblasen.

Zweckmäßigerweise wird das regenerierte Waschmedium am Boden der Regenerationsstufe abgezogen. Das Waschmedium enthält hierbei die regenerierte katalytische Komponente und vorzugsweise bis zu 5 Gew.-% an Feststoff, also an Schwefel. Der zur Filtration abgezweigte Strom kann so sehr gering sein und dennoch die notwendige Menge an Schwefel ausschleusen, die gebildet wird. Vorteilhafterweise wird das regenerierte Waschmedium aus der Regenerationsstufe in einen Absorber geführt. Dort wird es erneut zur Absorption von Schwefelwasserstoff, insbesondere aus einem sauren Erdgas, genutzt.

Das die reduzierte katalytisch aktive Komponente enthaltende Waschmedium wird vor der Zufuhr zur Regenerationsstufe vorzugsweise einem Druckbehälter, einem sogenannten Flash-Behälter, zugeführt. Der Druckbehälter ist dem Absorber und der Regenerationsstufe vorzugsweise strömungstechnisch zwischengeschaltet. Innerhalb des Druckbehälters wird das Waschmedium entgast.

Vorzugsweise wird ein Strom des entgasten Waschmediums, welches elementaren Schwefel enthält, aus dem Druckbehälter entnommen und einer dem Druckbehälter strömungstechnisch angeschlossenen Abtrenneinheit zugeführt. In der Abtrenneinheit wird der im Waschmedium enthaltene Schwefel aus diesem abgetrennt. Als Abtrenneinheit kann - als Teil einer Aufbereitungsvorrichtung für das Waschmedium - beispielsweise eine Filtrationseinheit oder ein Zyklon eingesetzt werden. Das von dem Feststoff gereinigte Waschmedium wird wieder der Regenerationsstufe zugeführt.

Die zweite Aufgabe der Erfindung wird erfindungsgemäß gelöst durch eine Vorrichtung zur Entschwefelung eines Schwefelwasserstoff enthaltenden Gasstroms, insbesondere eines zur Verbrennung in einer Gasturbine nutzbaren Brenngasstroms, umfassend einen Absorber zur Absorption von Schwefelwasserstoff aus dem Gasstrom unter Bildung von elementarem Schwefel mittels eines eine katalytische aktive Komponente enthaltenden Waschmediums, sowie eine mit dem Absorber strömungstechnisch verbundene Regenerationsstufe zur Regeneration der bei der Schwefelbildung reduzierten katalytisch aktiven Komponente, wobei die Regenerationsstufe zur Zufuhr des sauerstoffhaltigen Gases eine Zuluftzufuhr aufweist, der eine Abführleitung eines Verdichters einer Gasturbine strömungstechnisch angeschlossen ist.

Durch die strömungstechnische Verbindung der Abführleitung des Verdichters der Gasturbine mit der Zuluftzufuhr der Regenerationsstufe strömt aus dem Verdichter der Gasturbine entnommene Luft in die Regenerationsstufe und stellt so die zur Entschwefelung eines Gasstroms benötigte Sauerstoffmenge bereit. Eine solche Vorrichtung ermöglicht eine einfache, kostengünstige und wirtschaftlich effiziente prozessuale Kombination von Gasentschwefelung und Gasturbinenbetrieb.

Nach der Abtrennung des elementaren Schwefels aus dem Waschmedium wird das die verbrauchte katalytisch aktive Komponenten enthaltende Waschmedium über die strömungstechnische Verbindung der Regenerationsstufe mit dem Absorber ausgehend vom Absorber der Regenerationsstufe zugeführt. Der Absorber ist hierbei vorzugsweise über eine Abführleitung mit einer Zuführleitung der Regenerationsstufe gekoppelt. Die Zuführleitung der Regenerationsstufe zur Dosierung des Waschmediums ist vorzugsweise an deren Kopf angeschlossen.

Zur Zufuhr des sauerstoffhaltigen Gases ist die Zuluftzufuhr der Regenerationsstufe vorzugsweise an deren Boden angeschlossen. Die Zuluftzufuhr kann beispielsweise in Form einer oder mehrerer Öffnungen in der Regenerationsstufe ausgebildet sein und ermöglicht die Luftzufuhr der für Regeneration der katalytisch aktiven Komponente benötigten Sauerstoffmenge.

Vorzugsweise ist zur Umwandlung des im Waschmedium absorbierten Schwefelwasserstoffs in elementaren Schwefel als katalytisch aktive Komponente ein Metallsalz eingesetzt.

Als Waschmedium selbst ist vorzugsweise eine wässrige Aminosäuresalzlösung eingesetzt. Die katalytisch aktive Komponente ist dem Waschmedium zweckmäßigerweise beigemischt. Zweckmäßigerweise ist dem Waschmedium ebenfalls eine Komplexbildner zur Maskierung der Metallionen vor.

Das Verhältnis der zur Rückbildung der katalytisch aktiven Komponente der Regenerationsstufe zugeführten Menge an Sauerstoff zur Menge der katalytisch aktiven Komponente liegt vorteilhaft bei einem Wert > 1. So wird eine vollständige Regeneration der katalytisch aktiven Komponente sichergestellt.

Zweckmäßigerweise ist die Zuluftzufuhr als eine Zuführleitung ausgebildet, die einen Wärmetauscher umfasst. Die Zuführleitung ist zweckmäßigerweise der Regenerationsstufe angeschlossen und vorzugsweise strömungstechnisch mit der Abführleitung des Verdichters der Gasturbine verbunden.

Mittels des Wärmtauschers wird das dem Verdichter entnommene sauerstoffhaltige Gas gekühlt. Die hierbei freiwerdende Wärme wird vorzugsweise anderweitig genutzt. Der Wärmetauscher ist hierzu vorzugsweise wärmetechnisch mit einer Aufbereitungsvorrichtung für das Waschmedium gekoppelt. Alternativ oder zusätzlich kann die freiwerdende Wärme in einen Entschwefelungsprozess eingekoppelt werden.

Besonders bevorzugt ist der Regenerationsstufe eine mit dem Verdichter der Gasturbine strömungstechnisch verbundene Abluftleitung angeschlossen. Über die Abluftleitung wird bei der Regeneration der katalytisch aktiven Komponente entstehende Abluft in den Verdichter der Gasturbine zurückgeführt. Die Abluftleitung ist zweckmäßigerweise am Kopf der Regenerationsstufe angeschlossen. Zur Zufuhr der Abluft zum Verdichter der Gasturbine ist die Abluftleitung vorzugsweise strömungstechnisch mit einer Zuführleitung des Verdichters der Gasturbine verbunden.

In einer weiter vorteilhaften Ausgestaltung ist der Regenerationsstufe eine Abführleitung für regeneriertes Waschmedium angeschlossen. Unter dem regenerierten Waschmedium wird das Waschmedium verstanden, welches die in der Regenerationsstufe regenerierte katalytisch aktive Komponente beinhaltet. Vorzugsweise ist die Regenerationsstufe über die Abführleitung strömungstechnisch mit dem Absorber verbunden. So wird das regenerierte Waschmedium wieder dem Absorber zugeführt. Hierzu ist die Abführleitung der Regenerationsstufe zweckmäßigerweise mit einer Zuführleitung des Absorbers gekoppelt. Das Waschmedium wird somit in einem Kreislauf geführt.

Die zu bevorzugten Ausgestaltungen des Verfahrens genannten Vorteile können sinngemäß auf entsprechende Ausgestaltungen der Vorrichtung übertragen werden.

Im Folgenden wird ein Ausführungsbeispiel der Erfindung anhand einer Zeichnung näher erläutert.

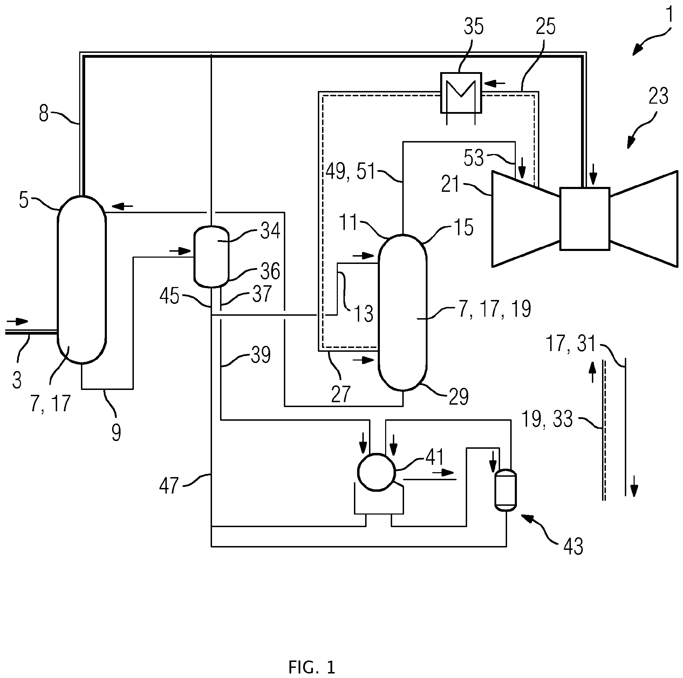

FIG 1 zeigt eine Vorrichtung 1 zur Entschwefelung eines Gasstroms 3, insbesondere eines Brenngasstroms für eine Gasturbine. Der Gasstrom 3 wird innerhalb eines Absorbers 5 mit einer wässrigen Aminosäuresalzlösung als Waschmedium 7 in Kontakt gebracht. Innerhalb des Absorbers 5 wird im Gasstrom 3 enthaltener Schwefelwasserstoff in dem Waschmedium 7 absorbiert. Das von Schwefelwasserstoff gereinigte Gas wird dem Absorber 5 über eine Abführleitung 8 entnommen und einer Verbrennung in einem Gasturbinenprozess zugeführt.

Über eine weitere dem Absorber 5 angeschlossene Abführleitung 9 wird das Waschmedium 7 einer Regenerationsstufe 11 zugeführt. Hierzu ist die dem Absorber 5 angeschlossene Abführleitung 9 strömungstechnisch mit einer Zuführleitung 13 der Regenerationsstufe 11 verbunden. Die Zuführleitung 13 ist am Kopf 15 der Regenerationsstufe 11 angeschlossen.

Das im Absorber 5 eingesetzte Waschmedium 7 enthält eine katalytisch aktive Komponente 17. Bei der Absorption des Schwefelwasserstoffes innerhalb des Waschmediums 7 bilden sich Sulfide, die aufgrund der Anwesenheit der katalytisch aktiven Komponente 17 bereits im Absorber 5 zu elementarem Schwefel reagieren. Hierbei wird die katalytisch aktive Komponente 17, vorliegend komplexierte Eisen(III)-Ionen, reduziert. Der Schwefel fällt als Feststoff aus, die durch die Reduktion gebildeten Fe(II)-Ionen bleiben in Lösung und werden durch EDTA als dem Waschmedium zugesetzten Komplexbildner maskiert. Somit wird das die verbrauchte katalytisch aktive Komponente 17 und den elementaren Schwefel enthaltende Waschmedium 7 über die Abführleitung 9 aus dem Absorber 5 abgeführt.

Um die katalytisch aktive Komponente 17 zurückzubilden und erneut als Katalysator einsetzen zu können, wird das den elementaren Schwefel und die Fe(II)-Ionen enthaltende Waschmedium 7 der Regenerationsstufe 11 zugeführt. In die Regenerationsstufe 11 wird ein sauerstoffhaltiges Gas 19 dosiert, welches einem Verdichter 21 einer Gasturbine 23 entnommen.

Die Zufuhr des sauerstoffhaltigen Gases 19 erfolgt über die Verbindung einer Abführleitung 25 des Verdichters 21 mit einer als Zuführleitung ausgebildeten Zuluftzufuhr 27 der Regenerationsstufe 11. Die Zuluftzufuhr 27 ist am Boden 29 der Regenerationsstufe 11 ausgebildet. Durch diese strömungstechnische Verbindung der Abführleitung 25 des Verdichters 21 der Gasturbine 23 mit der Zuführleitung 27 der Regenerationsstufe 11 kann aus dem Verdichter 21 entnommenen Luft 19 in die Regenerationsstufe 11 strömen und so die zur Oxidation der katalytisch aktiven Komponenten 17 benötigte Sauerstoffmenge bereitstellen.

Das sauerstoffhaltige Gas 19, also die der Gasturbine 23 entnommenen Luft, strömt in einer der Strömungsrichtung 31 des Waschmediums 7 entgegengesetzten Strömungsrichtung 33 über die Zuführleitung 27 vom Boden 29 der Regenerationsstufe 11 ausgehend in diese ein. In der Zuführleitung 27 ist ein Wärmetauscher 35 angeordnet, der das Gas 19 vor dem Eintritt in die Regenerationsstufe 11 kühlt. Die hierbei entstehende Wärme kann beispielsweise in einem Aufbereitungsprozess für das Waschmedium 7 genutzt werden.

Die Rückbildung der katalytisch aktiven Komponente 17 erfolgt durch den Kontakt des Waschmediums 7 mit dem sauerstoffhaltigen Gas 19. Hierbei tritt der im Gas 19 enthaltene Sauerstoff von der Gasphase in die Flüssigphase, also in das Waschmedium 7, über. In der Flüssigphase erfolgt die Oxidation der zuvor bei der Schwefelbildung reduzierten Fe(II)-Ionen zu Fe(III)-Ionen. Die Fe(III)-Ionen stehen erneut zur Abtrennung im Waschmedium 7 enthaltenem Schwefelwasserstoff zur Verfügung.

Vor dem Eintritt in die Regenerationsstufe 11 wird das Waschmedium 7 einem Druckbehälter 34 zugeführt. Der Druckbehälter 34 dient der Entgasung des Waschmediums 7 vor der Regeneration. Der Druckbehälter 34 ist strömungstechnisch zwischen den Absorber 5 und die Regenerationsstufe 19 geschaltet und stellt das zur Abtrennung des elementaren Schwefels aus dem Waschmedium 7 notwendige Druckniveau bereit.

Über eine dem Boden 36 des Druckbehälters 34 angeschlossene Abzugsleitung 37 wird elementarer Schwefel gemeinsam mit einem Teil des Waschmediums 7 in Form einer Suspension 39 abgezogen und einer Abtrenneinheit 41 zugeführt. Es wird die Menge an Schwefel aus dem Prozess ausgeschleust, die pro Zeiteinheit im Absorber 5 gebildet wird. Innerhalb der Abtrenneinheit 41, vorliegend ausgebildet als eine Filtrationseinheit, wird der Schwefel vollständig vom Waschmedium 7 abgetrennt und aus dem Prozess entfernt. Das verbleibende Waschmedium 7 wird einer Aufbereitungsvorrichtung 43 zugeführt und dort abschließend gereinigt.

Das entgaste und durch den Abzug des Suspension 39 von Schwefel gereinigte Waschmedium 7 wird ausgehend vom Druckbehälter 34 ebenfalls an dessen Boden 36 über eine weitere Abzugsleitung 45 abgezogen und in die Regenerationsstufe 19 weitergeleitet. Hierzu ist die Abzugsleitung 45 des Druckbehälters 34 strömungstechnisch mit der Zuführleitung 13 der Regenerationsstufe 19 verbunden.

Der Aufbereitungsvorrichtung 43 ist weiter eine Rückführleitung 47 angeschlossen, die strömungstechnisch mit der Abzugsleitung 43 des Druckbehälters bzw. mit der Zuführleitung 13 der Regenerationsstufe 19 verbunden ist. Hierüber wird aufbereitetes Waschmedium 7 der Regenerationsstufe 11 zugeführt.

Die bei der Regeneration der katalytisch aktiven Komponente 17 innerhalb der Regenerationsstufe 11 entstehende Abluft 49 wird in den Verdichter 21 der Gasturbine 23 zurückgeführt. Hierzu ist der Regenerationsstufe 11 an deren Kopf 15 eine Abluftleitung 51 angeschlossen, die mit einer Zuführleitung 51 des Verdichters 21 verbunden ist. Bei der Abluft 49 handelt es sich um den bei der Oxidation der katalytisch aktiven Komponente 17 von Sauerstoff abgereicherten Abluftstrom, der dann den Verbrennungsprozess der Gasturbine 23 durchläuft.

## Patentansprüche

1. Verfahren zur Entschwefelung eines Schwefelwasserstoff enthaltenden Gasstroms (3), insbesondere eines zur Verbrennung in einer Gasturbine (23) nutzbaren Gasstroms, wobei der Gasstrom (3) zur Absorption des Schwefelwasserstoffes und unter Bildung von elementarem Schwefel mit einem eine katalytisch aktive Komponente (17) enthaltenden Waschmedium (7) kontaktiert wird, wobei die katalytisch aktive Komponente (17) bei der Bildung des elementaren Schwefels reduziert wird, wobei das die reduzierte katalytisch aktive Komponente (17) enthaltende Waschmedium (7) einer Regenerationsstufe (11) zugeführt wird, in der die reduzierte katalytisch aktive Komponente (17) durch Oxidation mit einem der Regenerationsstufe (11) zugeführten sauerstoffhaltigen Gas (19) zurückgebildet wird, und wobei das sauerstoffhaltige Gas (19) der Regenerationsstufe (11) von einem Verdichter (21) einer Gasturbine (23) zugeführt wird.

2. Verfahren nach Anspruch 1, wobei Waschmedium (7) der Regenerationsstufe an deren Kopf (15) zugeführt wird.

3. Verfahren nach Anspruch 1 oder 2, wobei das sauerstoffhaltige Gas (19) der Regenerationsstufe (11) an deren Boden (29) zugeführt wird.

4. Verfahren nach einem der vorhergehenden Ansprüche, wobei als katalytisch aktive Komponente (17) ein Metallsalz eingesetzt wird.

5. Verfahren nach einem der vorhergehenden Ansprüche, wobei die Menge des der Regenerationsstufe (11) zugeführten sauerstoffhaltigen Gases (19) derart dosiert wird, dass das Verhältnis der zugeführten Menge an Sauerstoff zur Menge der katalytisch aktiven Komponente (17) > 1 ist.

6. Verfahren nach einem der vorhergehenden Ansprüche, wobei das sauerstoffhaltige Gas (19) vor dem Eintritt in die Regenerationsstufe (11) gekühlt wird.

7. Verfahren nach Anspruch 6, wobei die bei der Kühlung des sauerstoffhaltigen Gases (19) freiwerdende Wärme einer Aufbereitungsvorrichtung (43) zur Aufbereitung des Waschmediums(7) zugeführt wird.

8. Verfahren nach einem der vorhergehenden Ansprüche, wobei bei der Regeneration der katalytisch aktiven Komponente (17) entstehende Abluft (49) in den Verdichter (21) der Gasturbine (23) zurückgeführt wird.

9. Verfahren nach einem der vorhergehenden Ansprüche, wobei das regenerierte Waschmedium (7) aus der Regenerationsstufe (11) abgezogen wird.

10. Verfahren nach einem der vorhergehenden Ansprüche, wobei das regenerierte Waschmedium (7) aus der Regenerationsstufe (11) in einen Absorber (5) geführt wird.

11. Vorrichtung (1) zur Entschwefelung eines Schwefelwasserstoff enthaltenden Gasstroms (3), insbesondere eines zur Verbrennung in einer Gasturbine (23) nutzbaren Brenngasstroms, umfassend
- einen Absorber (5) zur Absorption von Schwefelwasserstoff aus dem Gasstrom (3) unter Bildung von elementarem Schwefel mittels eines eine katalytische aktive Komponente (17) enthaltenden Waschmediums (7), sowie
- eine mit dem Absorber (5) strömungstechnisch verbundene Regenerationsstufe (11) zur Regeneration der bei der Schwefelbildung reduzierten katalytisch aktiven Komponente (17),
- eine Gasturbine (23), umfassend einen Verdichter (21), wobei die Regenerationsstufe (11) zur Zufuhr des sauerstoffhaltigen Gases (19) eine Zuluftzufuhr (27) aufweist, der die Abführleitung (25) des Verdichters (21) der Gasturbine (23) strömungstechnisch angeschlossen ist.

12. Vorrichtung (1) nach Anspruch 11, wobei am Kopf (15) der Regenerationsstufe (11) eine Zuführleitung (13) für das Waschmedium (7) angeschlossen ist.

13. Vorrichtung (1) nach Anspruch 11 oder 12, wobei die Zuluftzufuhr (27) am Boden (29) der Regenerationsstufe (11) angeschlossen ist.

14. Vorrichtung (1) nach einem der Ansprüche 11 bis 13, wobei als katalytisch aktive Komponente (17) ein Metallsalz eingesetzt ist.

15. Vorrichtung (1) nach einem der Ansprüche 11 bis 14, wobei das Verhältnis der der Regenerationsstufe (11) zugeführten Menge an Sauerstoff zur Menge der katalytisch aktiven Komponente (17) bei einem Wert > 1 liegt.

16. Vorrichtung (1) nach einem der Ansprüche 11 bis 15, wobei die Zuluftzufuhr (27) als eine Zuführleitung ausgebildet ist, die einen Wärmetauscher (35) umfasst.

17. Vorrichtung (1) nach Anspruch 16, wobei der Wärmetauscher (35) mit einer Aufbereitungsvorrichtung (43) gekoppelt ist.

18. Vorrichtung (1) nach einem der Ansprüche 11 bis 17, wobei der Regenerationsstufe (11) eine mit dem Verdichter (21) der Gasturbine (23) strömungstechnisch verbundenen Abluftleitung (49) angeschlossen ist.

19. Vorrichtung (1) nach einem der Ansprüche 11 bis 18, wobei der Regenerationsstufe (11) eine Abzugsleitung für das Waschmedium (7) angeschlossen ist.

20. Vorrichtung nach Anspruch 19, wobei die Regenerationsstufe (11) über die Abzugsleitung strömungstechnisch mit dem Absorber (5) gekoppelt ist.

## Claims

1. Method for desulfurizing a hydrogen-sulfide-comprising gas stream (3), in particular a gas stream utilizable for burning in a gas turbine (23), wherein the gas stream (3) is contacted with a scrubbing medium (7) comprising a catalytically active component (17) to absorb the hydrogen sulfide and to form elemental sulfur, wherein the catalytically active component (17) is reduced during the formation of the elemental sulfur, wherein the scrubbing medium (7) comprising the reduced catalytically active component (17) is supplied to a regeneration stage (11) in which the reduced catalytically active component (17) is reformed by oxidation with an oxygen-comprising gas (19) supplied to the regeneration stage (11), and wherein the oxygen-comprising gas (19) is supplied to the regeneration stage (11) from a compressor (21) of a gas turbine (23).

2. Method according to Claim 1, wherein scrubbing medium (7) is supplied to the regeneration stage at the top (15) thereof.

3. Method according to Claim 1 or 2, wherein the oxygen-comprising gas (19) is supplied to the regeneration stage (11) at the bottom (29) thereof.

4. Method according to any of the preceding claims, wherein a metal salt is employed as the catalytically active component (17) .

5. Method according to any of the preceding claims, wherein the amount of the oxygen-comprising gas (19) supplied to the regeneration stage (11) is metered such that the ratio of the supplied amount of oxygen to the amount of the catalytically active component (17) is > 1.

6. Method according to any of the preceding claims, wherein the oxygen-comprising gas (19) is cooled before entry into the regeneration stage (11).

7. Method according to Claim 6, wherein the heat liberated during the cooling of the oxygen-comprising gas (19) is supplied to a treatment apparatus (43) for treatment of the scrubbing medium (7).

8. Method according to any of the preceding claims, wherein waste air (49) formed during the regeneration of the catalytically active component (17) is recycled into the compressor (21) of the gas turbine (23).

9. Method according to any of the preceding claims, wherein the regenerated scrubbing medium (7) is withdrawn from the regeneration stage (11).

10. Method according to any of the preceding claims, wherein the regenerated scrubbing medium (7) is passed from the regeneration stage (11) into an absorber (5).

11. Apparatus (1) for desulfurizing a hydrogen-sulfide-comprising gas stream (3), in particular a fuel gas stream utilizable for burning in a gas turbine (23), comprising
- an absorber (5) for absorbing hydrogen sulfide from the gas stream (3) to form elemental sulfur by means of a scrubbing medium (7) comprising a catalytically active component (17) and
- a regeneration stage (11) for regenerating the catalytically active component (17) reduced during the sulfur formation which is fluidically connected to the absorber (5),
- a gas turbine (23) comprising a compressor (21), wherein the regeneration stage (11) comprises an input air feed (27) for feeding the oxygen-comprising gas (19) which is fluidically connected to the discharge conduit (25) of the compressor (21) of the gas turbine (23).

12. Apparatus (1) according to Claim 11, wherein a feed conduit (13) for the scrubbing medium (7) is connected to the top (15) of the regeneration stage (11).

13. Apparatus (1) according to Claim 11 or 12, wherein the input air feed (27) is connected to the bottom (29) of the regeneration stage (11).

14. Apparatus (1) according to any of Claims 11 to 13, wherein a metal salt is employed as the catalytically active component (17).

15. Apparatus (1) according to any of Claims 11 to 14, wherein the ratio of the amount of oxygen supplied to the regeneration stage (11) to the amount of catalytically active component (17) is > 1.

16. Apparatus (1) according to any of Claims 11 to 15, wherein the input air feed (27) is implemented as a feed conduit comprising a heat exchanger (35).

17. Apparatus (1) according to Claim 16, wherein the heat exchanger (35) is coupled to a treatment apparatus (43).

18. Apparatus (1) according to any of Claims 11 to 17, wherein a waste air conduit (49) fluidically connected to the compressor (21) of the gas turbine (23) is connected to the regeneration stage (11).

19. Apparatus (1) according to any of Claims 11 to 18, wherein a withdrawal conduit for the scrubbing medium (7) is connected to the regeneration stage (11).

20. Apparatus according to Claim 19, wherein the regeneration stage (11) is fluidically coupled to the absorber (5) via the withdrawal conduit.

## Revendications

1. Procédé de désulfuration d'un courant (3) gazeux, contenant de l'hydrogène sulfuré, notamment d'un courant gazeux pouvant être utilisé pour la combustion dans une turbine (23) à gaz, dans lequel, pour l'absorption de l'hydrogène sulfuré et avec formation de soufre élémentaire, on met le courant (1) gazeux en contact avec un fluide (7) de lavage, contenant un constituant (17) actif catalytiquement, le constituant (17) actif catalytiquement étant réduit lors de la formation du soufre élémentaire, dans lequel on envoie le fluide (7) de lavage contenant le constituant (17) actif catalytiquement réduit à un étage (11) de régénération, dans lequel le constituant (17) actif catalytiquement réduit est reformé par oxydation par un gaz (19) contenant de l'oxygène, envoyé au stade (11) de régénération, et dans lequel on envoie le gaz (19) contenant de l'oxygène à l'étage (11) de régénération par un compresseur (21) d'une turbine (23) à gaz.

2. Procédé suivant la revendication 1, dans lequel on envoie du fluide (7) de lavage en tête (15) de l'étage de régénération.

3. Procédé suivant la revendication 1 ou 2, dans lequel on envoie du gaz (19) contenant de l'oxygène au fond (29) de l'étage (11) de régénération.

4. Procédé suivant l'une des revendications précédentes, dans lequel on utilise un sel métallique, comme constituant (17) actif catalytiquement.

5. Procédé suivant l'une des revendications précédentes, dans lequel on ajoute, de manière dosée, la quantité du gaz (19) contenant de l'oxygène envoyée à l'étage (11) de régénération, de manière à ce que le rapport de la quantité d'oxygène envoyée à la quantité du constituant (17) actif catalytiquement soit plus grand que 1.

6. Procédé suivant l'une des revendications précédentes, dans lequel on refroidit le gaz (19) contenant de l'oxygène avant l'entrée dans l'étage (11) de régénération.

7. Procédé suivant la revendication 6, dans lequel on envoie la chaleur dégagée lors du refroidissement du gaz (19) contenant de l'oxygène à une installation (43) de traitement du fluide (7) de lavage.

8. Procédé suivant l'une des revendications précédentes, dans lequel on retourne au compresseur (21) de la turbine (23) à gaz de l'air (49) d'échappement se créant à la régénération du constituant (17) actif catalytiquement.

9. Procédé suivant l'une des revendications précédentes, dans lequel on soutire le fluide (7) de lavage régénéré de l'étage (11) de régénération.

10. Procédé suivant l'une des revendications précédentes, dans lequel on envoie le fluide (7) de lavage régénéré de l'étage (11) de régénération à un absorbeur (5).

11. Installation (1) de désulfuration d'un courant (3) gazeux contenant de l'hydrogène sulfuré, notamment d'un courant gazeux utile pour la combustion dans une turbine (23) à gaz, comprenant
- un absorbeur (5) pour absorber de l'hydrogène sulfuré et du courant (3) gazeux avec formation de soufre élémentaire, au moyen d'un fluide (7) de lavage contenant un constituant (17) actif catalytiquement, ainsi que
- un étage (11) de régénération communiquant en technique d'écoulement avec l'absorbeur (5) pour régénérer le constituant (17) actif catalytiquement réduit lors de la formation de soufre,
- une turbine (23) à gaz, comprenant un compresseur (21), l'étage (11) de régénération ayant, pour l'envoi du gaz (19) contenant de l'oxygène, un conduit (27) d'envoi d'air, avec lequel communique en technique d'écoulement le conduit (25) d'évacuation du compresseur (21) de la turbine (23) à gaz.

12. Installation (1) suivant la revendication 11, dans laquelle un conduit (13) d'apport du fluide (7) de lavage est raccordé en tête (15) de l'étage (11) de régénération.

13. Installation (1) suivant la revendication 11 ou 12, dans laquelle le conduit (27) d'apport d'air est raccordé au fond (29) de l'étage (11) de régénération.

14. Installation (1) suivant l'une des revendications 11 à 13, dans laquelle il est utilisé un sel métallique, comme constituant (17) actif catalytiquement.

15. Installation (1) suivant l'une des revendications 11 à 14, dans laquelle le rapport de la quantité d'oxygène envoyée à l'étage (11) de régénération à la quantité du constituant (17) actif catalytiquement est supérieure à 1.

16. Installation (1) suivant l'une des revendications 11 à 15, dans laquelle l'apport (27) d'air est constitué sous la forme d'un conduit d'apport, qui comprend un échangeur de chaleur (35).

17. Installation (1) suivant la revendication 16, dans laquelle l'échangeur de chaleur (35) est couplé à une installation (43) de traitement.

18. Installation (1) suivant l'une des revendications 11 à 17, dans laquelle, à l'étage (11) de régénération, est raccordé un conduit (49) d'air d'échappement communiquant en technique d'écoulement avec le compresseur (21) de la turbine (23) à gaz.

19. Installation (1) suivant l'une des revendications 11 à 18, dans laquelle à l'étage (11) de régénération est raccordé un conduit d'évacuation du fluide (7) de lavage.

20. Installation (1) suivant la revendication 19, dans laquelle l'étage (11) de régénération est couplé en technique d'écoulement à l'absorbeur (5) par le conduit d'évacuation du fluide (7) de lavage.
